# EUROPEAN PATENT APPLICATION

(11) **EP 4 400 918 A1**
(43) Date of publication of application: **17.07.2024**
(21) Application number: 23151397.9
(22) Date of filing: 12.01.2023
(51) Int. Cl.: G05B 13/02

(54) **A METHOD AND A SYSTEM FOR PREDICTING ENERGY CONSUMPTION IN AN ELECTRICAL DISTRIBUTION SYSTEM**

(71) Applicant: ABB S.P.A, 20124 Milano (IT)
(72) Inventor: PAL, Mayukha, 502032 Sangareddy (IN); REDDY, Maneesh, 508211 Nakrekal (IN)
(74) Representative: Zimmermann & Partner Patentanwälte mbB

(57) **Abstract**

The present disclosure relates to method of predicting energy consumption in electrical distribution system (101). The method comprises receiving time-series data of plurality of input variables and output variable of electrical distribution system (101), from one or more sensors (102). Further, the method comprises determining first set of input variables based on effects of plurality of input variables on output variable, by associating time-series data of each of plurality of input variables with time-series data of output variable. Furthermore, the method comprises determining second set of input variables and one or more dependency parameters, based on dependency between each variable of first set of input variables and output variable, at past time instances. Thereafter, the method comprises generating network representation indicating second set of input variables, output variable, and one or more dependency parameters. A machine learning model predicts energy consumption in electrical distribution system (101) using network representation.

## Description

### TECHNICAL FIELD

The present disclosure generally relates to data analytics in electrical distribution systems. More particularly, the present disclosure relates to a method and a system for predicting energy consumption in an electrical distribution system.

### BACKGROUND

Electrical distribution system is an electrical network for distributing electrical energy to end users for utilization. The electrical distribution system may include components such as, supply lines, transformers, switchgears, circuit breakers, switches, relays, fuses, cooling circuits, receptacles, utilization components, and the like. The increase in urbanization and industrialization is leading to high demand for energy. Hence, monitoring energy availability or consumption is critical in the electrical distribution system. Energy management techniques are used to monitor the energy availability or consumption to avoid demand supply issues in distribution of the energy. Such energy management techniques utilize data related to multiple variables of the electrical distribution systems to optimize the energy consumption.

Conventional energy management techniques monitor the energy consumption based on pre-defined relationships among the variables of the electrical distribution systems. However, there exist complex correlations among the variables in real-time field conditions. This leads to deviations in the pre-defined relationships among the variables. The conventional energy management techniques do not consider the real-time field conditions. Hence, such conventional energy management techniques are prone to error.

The information disclosed in this background of the disclosure section is only for enhancement of understanding of the general background of the invention and should not be taken as an acknowledgement or any form of suggestion that this information forms the prior art already known to a person skilled in the art.

### SUMMARY

In an embodiment, the present disclosure discloses a method of predicting energy consumption in an electrical distribution system. The method comprises receiving time-series data of a plurality of input variables and an output variable of an electrical distribution system, from one or more sensors associated with the electrical distribution system. Further, the method comprises determining a first set of input variables from the plurality of input variables, based on effects of the plurality of input variables on the output variable. The first set of input variables are determined by associating the time-series data of each of the plurality of input variables with the time-series data of the output variable. Furthermore, the method comprises determining a second set of input variables from the first set of input variables and one or more dependency parameters, based on a dependency between each variable of the first set of input variables and the output variable, at a plurality of past time instances. Thereafter, the method comprises generating a network representation indicating the second set of input variables, the output variable, and the one or more dependency parameters. A machine learning model predicts energy consumption in the electrical distribution system using the network representation.

In an embodiment, the plurality of input variables and the output variable comprises at least one of, electrical variables, mechanical variables, and environmental variables of the electrical distribution system.

In an embodiment, the second set of input variables are associated with a pre-defined dependency value on the output variable.

In an embodiment, the time-series data of each of the plurality of input variables and the output variable is converted to covariance-stationary series.

In an embodiment, the method comprises identifying the plurality of past time instances for generation of the network representation. Firstly, the method includes determining an accuracy level of the machine learning model to determine the energy consumption for the time-series data, at one or more past time instances. Then, the method includes identifying the plurality of past time instances, until the accuracy level is within a pre-defined value.

In an embodiment, the first set of input variables are determined from the plurality of input variables by using a Granger causality technique, based on regression analysis.

In an embodiment, the second set of input variables and the one or more dependency parameters are determined using a conditional independence technique.

In an embodiment, the one or more dependency parameters comprise at least one of, a strength of the dependency, a directionality of the dependency, and a number of past time instances associated with the dependency from the plurality of past time instances.

In an embodiment, the present disclosure discloses an energy prediction system for predicting energy consumption in an electrical distribution system. The energy prediction system comprises a processor and a memory. The processor is configured to receive time-series data of a plurality of input variables and an output variable of an electrical distribution system, from one or more sensors associated with the electrical distribution system. Further, the processor is configured to determine a first set of input variables from the plurality of input variables, based on effects of the plurality of input variables on the output variable. The first set of input variables are determined by associating the time-series data of each of the plurality of input variables with the time-series data of the output variable. Furthermore, the processor is configured to determine a second set of input variables from the first set of input variables and one or more dependency parameters, based on a dependency between each variable of the first set of input variables and the output variable, at a plurality of past time instances. Thereafter, the processor is configured to generate a network representation indicating the second set of input variables, the output variable, and the one or more dependency parameters. A machine learning model predicts energy consumption in the electrical distribution system using the network representation.

As used in this summary, in the description below, in the claims below, and in the accompanying drawings, the term "electrical distribution system" is defined as an electrical network through which electrical energy is distributed to end users for utilization. The electrical distribution system comprises multiple components such as supply lines, transformers, switchgears, circuit breakers, switches, relays, fuses, cooling circuits, receptacles, utilization components, and the like.

As used in this summary, in the description below, in the claims below, and in the accompanying drawings, the term "at least" followed by a number is used in to denote the start of a range beginning with that number (which may be a range having an upper limit or no upper limit, depending on the variable being defined). For example, "at least one" means one or more than one.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The novel features and characteristics of the disclosure are set forth in the appended claims. The disclosure itself, however, as well as a preferred mode of use, further objectives, and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:
**Figure 1** illustrates an exemplary environment for predicting energy consumption in an electrical distribution system, in accordance with some embodiments of the present disclosure;
**Figure 2** illustrates a detailed diagram of an energy prediction system for predicting energy consumption in an electrical distribution system, in accordance with some embodiments of the present disclosure;
**Figures 3A-3B** show exemplary illustrations for determining a first set of input variables for predicting energy consumption in an electrical distribution system, in accordance with some embodiments of the present disclosure;
**Figures 4A-4B** show exemplary illustrations for determining a second set of input variables for predicting energy consumption in an electrical distribution system, in accordance with some embodiments of the present disclosure;
**Figure 5** shows an exemplary flow chart illustrating method steps for predicting energy consumption in an electrical distribution system, in accordance with some embodiments of the present disclosure; and
**Figure 6** illustrates a block diagram of an exemplary computer system for predicting energy consumption in an electrical distribution system, in accordance with some embodiments of the present disclosure.

It should be appreciated by those skilled in the art that any block diagram herein represents conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternatives falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or apparatus.

An increase in urbanization and industrialization is leading to high demand for energy. Hence, monitoring energy availability or consumption is critical in electrical distribution systems. Electrical distribution system is an electrical network for distributing electrical energy to end users for utilization. Conventional energy management techniques monitor the energy consumption based on pre-defined relationships among variables of the electrical distribution system. However, the conventional energy management techniques do not consider complex correlations among the variables in real-time field conditions which causes deviations in the pre-defined relationships among the variables.

Accordingly, the present disclosure provides a method and a system for predicting energy consumption in an electrical distribution system. The present disclosure uses time series data of variables of the electrical distribution system to perform casual analysis for predicting the energy consumption. Firstly, the present disclosure identifies a first set of input variables which influence on an output variable (for instance, power) based on a causal modelling approach. The casual modelling approach is used for filtering the first set of input variables having effect on the output variable. Then, the present disclosure identifies a second set of input variables from the first set of input variables based on a dependency of the first set of input variables and the output variable. A causal network is generated based on the dependency, which indicates a strength of the dependency, a directionality of the dependency, a time lag associated with the dependency, and the like. The causal network provides improved causal analysis and reduces false positives in determination of the causal relationships. Hence, the present disclosure increases accuracy in predicting the energy consumption by using the casual relationship analysis on real-time field data of the electrical distribution system.

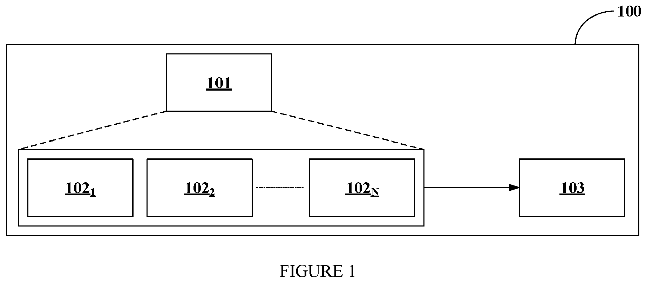

**Figure** 1 illustrates an exemplary environment 100 for predicting energy consumption in an electrical distribution system, in accordance with some embodiments of the present disclosure. The exemplary environment 100 comprises an electrical distribution system 101 and an energy prediction system 103. The electrical distribution system 101 is an electrical network through which electrical energy is distributed to end users for utilization. The electrical distribution system 101 comprises a plurality of components such as, supply lines, transformers, switchgears, circuit breakers, switches, relays, fuses, cooling circuits, receptacles, utilization components, and the like. The electrical distribution system 101 is associated with one or more sensors 102₁, 102₂, ........., 102_{N} (collectively referred as the one or more sensors 102). In an embodiment, the one or more sensors 102 may be implemented inside the electrical distribution system 101. For example, the one or more sensors 102 may include a current sensor, a voltage sensor, and the like. In another embodiment, the one or more sensors 102 may be implemented outside the electrical distribution system 101. For example, the one or more sensors 102 may include environmental sensors such as, a temperature sensor, a humidity sensor, and the like.

The energy prediction system 103 may be configured to predict the energy consumption in the electrical distribution system 101. The energy prediction system 103 may be a computing device such as, a laptop computer, a desktop computer, a Personal Computer (PC), a notebook, a smartphone, a tablet, a server, a network server, a cloud-based server, an edge computing device, a processing device, router, and the like. The present disclosure predicts the energy consumption by performing casual analysis on time-series data of a plurality of input variables and an output variable. The energy prediction system 103 may receive the time-series data of the plurality of input variables and the output variable from one or more sensors 102 associated with the electrical distribution system 101. The time-series data may comprise at least one of, real-time data and historical data. The plurality of input variables may comprise at least one of, electrical variables, mechanical variables, and environmental variables of the electrical distribution system 101. For example, the plurality of input variables may include the electrical variables such as current, voltage, and the like, the mechanical variables such as, wear and tear profiles, contact pressure, and the like, and the environmental variables such as temperature, humidity, and the like. The output variable may include a variable that helps to predict the energy consumption in the electrical distribution system 101. The output variable may include power, energy, and the like. A person skilled in the art will appreciate that the plurality of input variables and the output variable may include any variables other than the above-mentioned variables. Then, the present disclosure filters a first set of input variables from the plurality of input variables, which influences the output variable. To achieve this, the energy prediction system 103 determines the first set of input variables which has effect on the output variable, by associating the time-series data of each of the plurality of input variables with the time-series data of the output variable.

Further, the present disclosure determines a second set of input variables from the first set of variables based on a dependency between the with the first set of variables and the output variable, and determines one or more dependency parameters. The one or more dependency parameters define the dependency between the second set of inputs variables and the output variables. The one or more dependency parameters may include at least one of, a strength of the dependency, a directionality of the dependency, a time lag associated with the dependency from the plurality of past time instances, and the like. Subsequently, the energy prediction system 103 generates a network representation indicating the second set of input variables, the output variable, and the one or more dependency parameters. The network representation provides an indication on dependency between the second set of input variables and the output variables. The network representation may be provided to a machine learning model for predicting energy consumption in the electrical distribution system 101. The present disclosure enables use of the network representation generated based on field data of the electrical distribution system 101 for predicting the energy consumption. This improves accuracy in predicting the energy consumption.

In one implementation, the energy prediction system 103 may be implemented in an edge computing platform. In such embodiment, the energy prediction system 103 may generate the network representation using the time-series data of the plurality of input variables and the output variable in an edge device. In an embodiment, the machine learning model may be implemented in the edge device for predicting the energy consumption in the electrical distribution system 101 using the network representation. In another embodiment, the machine learning model may be implemented in the electrical distribution system 101, a system associated with the electrical distribution system 101 (for example, a system in an industrial plant including the electrical distribution system 101), or a cloud server. In this case, the energy prediction system 103 may transmit the network representation to the machine learning model for predicting the energy consumption in the electrical distribution system 101. In another implementation, the energy prediction system 103 may be implemented in a cloud computing platform. In such embodiment, the energy prediction system 103 may generate the network representation using the time-series data of the plurality of input variables and the output variable in the cloud server. In an embodiment, the machine learning model may be implemented in the cloud server for predicting the energy consumption in the electrical distribution system 101. In another embodiment, the machine learning model may be implemented in the electrical distribution system 101, a system associated with the electrical distribution system 101, or the edge device. In this case, the energy prediction system 103 may transmit the network representation to the machine learning model for predicting the energy consumption in the electrical distribution system 101. In another implementation, the energy prediction system 103 may be implemented in the electrical distribution system 101. In an embodiment, the machine learning model may be implemented in the electrical distribution system 101 for predicting the energy consumption in the electrical distribution system 101. In another embodiment, the machine learning model may be implemented in the edge device, the cloud server, or a system associated with the electrical distribution system 101. In this case, the energy prediction system 103 may transmit the network representation to the machine learning model for predicting the energy consumption in the electrical distribution system 101.

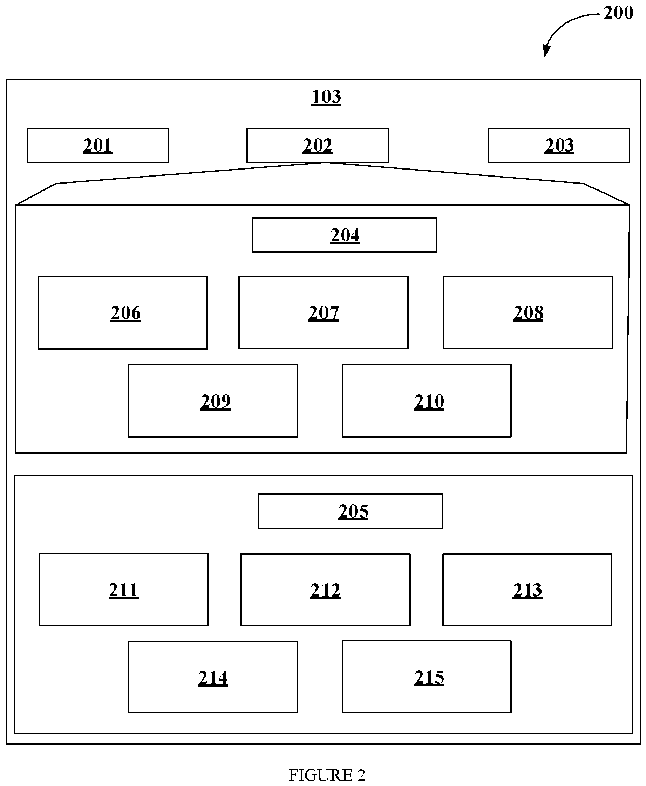

**Figure 2** illustrates a detailed diagram of the energy prediction system 103 for predicting the energy consumption in the electrical distribution system 101, in accordance with some embodiments of the present disclosure. The energy prediction system 103 comprises an Input/ Output (I/O) interface 201, a memory 202, and a processor 203. In some embodiments, the memory 202 may be communicatively coupled to the processor 203. The memory 202 stores instructions executable by the processor 203. The processor 203 may comprise at least one data processor for executing program components for executing user or system-generated requests. The memory 202 may be communicatively coupled to the processor 203. The memory 202 stores instructions, executable by the processor 203, which, on execution, may cause the processor 203 to predict the energy consumption in the electrical distribution system 101.

In an embodiment, the memory 202 may include computation data 204 one or more modules 205. The one or more modules 205 may be configured to perform the steps of the present disclosure using the computation data 204, to predict the energy consumption in the electrical distribution system 101. In an embodiment, each of the one or more modules 205 may be a hardware unit which may be outside the memory 202 and coupled with the energy prediction system 103. As used herein, the term modules 205 refers to an Application Specific Integrated Circuit (ASIC), an electronic circuit, a Field-Programmable Gate Arrays (FPGA), Programmable System-on-Chip (PSoC), a combinational logic circuit, and/or other suitable components that provide described functionality. The one or more modules 205 when configured with the described functionality defined in the present disclosure will result in a novel hardware. Further, the I/O interface 201 is coupled with the processor 203 through which an input signal or/and an output signal is communicated. For example, the energy prediction system 103 may communicate with the one or more sensors 102 via the I/O interface 201.

In one implementation, the modules 205 may include, for example, an input module 211, a first determination module 212, a second determination module 213, a network representation generation module 214, and other modules 215. It will be appreciated that such aforementioned modules 205 may be represented as a single module or a combination of different modules. In one implementation, the computation data 204 may include, for example, input data 206, first determination data 207, second determination data 208, network representation generation data 209, and auxiliary data 210.

In an embodiment, the input module 211 may be configured to receive the time-series data of the plurality of input variables and the output variable of the electrical distribution system 101 from one or more sensors 102 associated with the electrical distribution system 101. The plurality of input variables may comprise at least one of, electrical variables, mechanical variables, and environmental variables of the electrical distribution system 101. For example, the electrical variables may comprise variables such as, current, voltage, harmonic distortions, and the like. The mechanical variables may comprise wear and tear profiles, pressure, temperature, number of mechanical operations, and the like. The environmental variables may comprise variables such as temperature, humidity, and the like. In an example, the electrical distribution system 101 may comprise a circuit breaker. In such case, the electrical variables of the circuit breaker may include arc current, contact resistance, and the like. The mechanical variables may include contact pressure, contact temperature, opening and closing of circuit breaker, and the like. The environmental variables may include humidity, temperature, atmospheric pressure, and the like. The output variable may comprise variables associated with the energy consumption. For example, the output variable may comprise power, power factor, Total Active Energy (TAE), and the like. A person skilled in the art will appreciate that the plurality of input variables and the output variable may include any variables other than the above-mentioned variables.

The input module 211 may receive the time-series data of the plurality of input variables and the output variable from the one or more sensors 102 associated with the electrical distribution system 101. For example, the one or more sensors 102 may comprise, a current sensor, a voltage sensor, a temperature sensor, a pressor sensor, a humidity sensor, and the like. In an embodiment, the one or more sensors 102 may be implemented in the electrical distribution system 101. For example, the one or more sensors 102 may include the current sensor and the voltage sensor. In another embodiment, the one or more sensors 102 may be implemented outside the electrical distribution system 101. For example, the one or more sensors 102 may include the temperature sensor and the humidity sensor. The time-series data of the plurality of input variables and the output variable may comprise a sequence of data points of the plurality of input variables and the output variable indexed in time order. For example, the time-series data may comprise values of voltages with respect to time. The time-series data may be discrete or continuous-valued time series data. The time-series data of the plurality of input variables and the output variable may comprise at least one of, real-time data and historical data of the plurality of input variables and the output variable. In an embodiment, the time series data of the plurality of input variables and the output variable may be directly received from the one or more sensors 102. In another embodiment, the time-series data may be obtained from values of the plurality of input variables and the output variable received from the one or more sensors 102 at various time instances. In an embodiment, the historical data of the plurality of input variables and the output variable may be stored in a database. The database may be associated with the electrical distribution system 101, the edge device, or the cloud server, based on the implementation of the energy prediction system 103.

The time-series data of the plurality of input variables and the output variable is converted to stationary data for better analysis of the time-series data. In an embodiment, the input module 211 may be further configured to convert the time-series data of each of the plurality of input variables and the output variable to the stationary data or covariance-stationary series. A time-series data is said to be covariance-stationary series when properties of the time-series data such as, mean and variance, remain constant over time. A time series that is nonstationary leads to invalid linear regression estimates. In an embodiment, the input module 211 may perform unit root tests to determine stationarity in a time series and convert the time-series data to the covariance-stationary series. For example, the unit root tests may include Augmented Dickey-Fuller (ADF) test, Kwiatkowski-Phillips-Schmidt-Shin (KPSS) test, and the like. A person skilled in the art will appreciate that any techniques other than the above-mentioned techniques may be used to convert the time-series data of each of the plurality of input variables and the output variable to the covariance-stationary series. The time-series data of each of the plurality of input variables and the output variable may be stored as the input data 206 in the memory 202.

In an embodiment, the first determination module 212 may be configured to receive the input data 206 from the input module 211. Further, the first determination module 212 may be configured to determine a first set of input variables from the plurality of input variables. In an embodiment, the first determination module 212 determines the first set of input variables from the plurality of input variables by using a Granger causality technique. The Granger causality model uses a statistical hypothesis test for determining whether a time series is useful in forecasting another time series. For instance, a time series X is said to Granger-cause Y, when lagged/past values of X can provide statistically significant information about future values of Y. When the time series X "Granger-Causes" the time series Y, then past values of X help predict values of Y. The first determination module 212 uses the Granger causality technique to determine whether the time-series data of each of the plurality of input variables "Granger-Causes" the time-series data of the output variable. This helps to determine the effects of the plurality of input variables on the output variable.

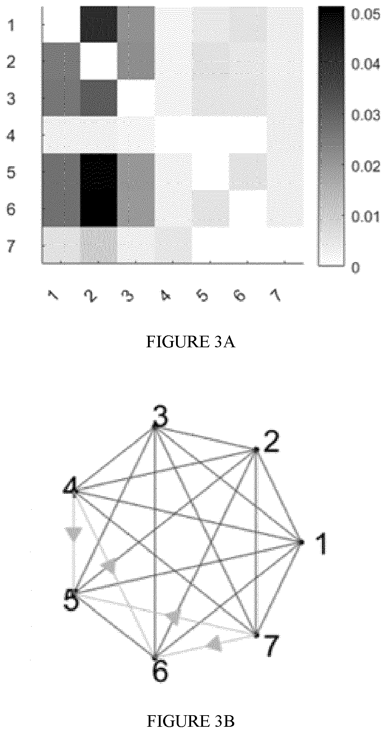

The first determination module 212 may associate the time-series data of each of the plurality of input variables with the time-series data of the output variable, using the Granger causality technique. In an embodiment, the first determination module 212 may associate the time-series data based on regression analysis. In an embodiment, the regression analysis may include using Multivariate Auto Regressive (MVAR) models. The first determination module 212 may determine whether the time-series data of the output variable changes in accordance with time-lagged values/past values of each of the plurality of input variables. The first determination module 212 may determine the first set of input variables by determining whether the time-series data of such variables "Granger-Causes" the time-series data of the output variable. Reference is made to **Figure 3A** illustrating effects of variables on each other. The variables may include the plurality of input variables and the output variable. Figure 3A represents the effects of the variables on each other through different shadings of black varied from light to dark. In this case, the first determination module 212 may identify the first set of input variables as variables 1-6 having the effect on the output variable 7. In an example, the variables 1-6 may include phase currents (referenced as 1, 2, 3), phase voltage (referenced as 4), average total active power (referenced as 5), and average total apparent power (referenced as 6). The output variable may include the TAE (referenced as 7). **Figure 3B** illustrates a granger causality graph indicating the variables 1-7. The casual relationship between the variables 1-7 is illustrates using links connecting nodes (variables) and arrows. A person skilled in the art will appreciate that any other techniques other than the above-described technique may be used to identity the first set of input variables from the plurality of input variables. The first set of variables may be stored as the first determination data 207 in the memory 202.

Referring back to Figure 2, in an embodiment, the second determination module 213 may be configured to receive the input data 206 from the input module 211 and the first determination data 207 from the first determination module 212. Further, the second determination module 213 may be configured to determine a second set of input variables from the first set of input variables and one or more dependency parameters. The second determination module 213 may determine the second set of input variables and the one or more dependency parameters using a conditional independence technique. The second determination module 213 may determine the dependency between each variable of the first set of input variables and the output variable, at a plurality of past time instances, using the conditional independence technique. The conditional independence technique may include, but not limited to, Peter Clark Momentary Conditional Independence (PCMCI) approach and Full Conditional Independence. The determination of the dependency between each variable of the first set of input variables and the output variable helps in determining the dependency of the output variable on past values of each variable of the first set of input variables.

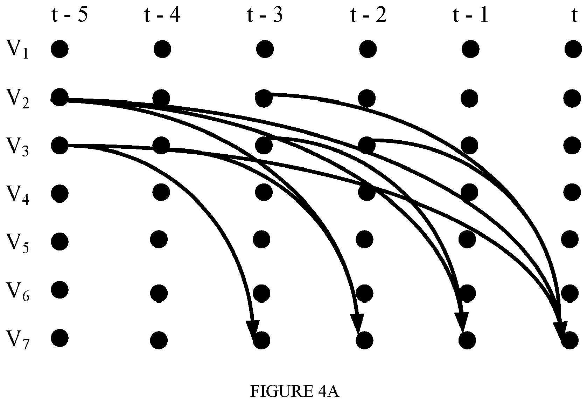

**Figure 4A** shows an exemplary representation illustrating dependency between each variable of the first set of input variables and the output variable, at the plurality of past time instances. The plurality of past time instances is indicated as `t-1'., `t-2', `t-3', 't-4', and `t-5'. The variables 1-7 are indicated as V₁, V₂, ........., V₇, and may indicate average phase current 1, average phase current 2, average phase current 3, average phase-to-phase voltage, average total active power, average total apparent power, and total active energy. As shown in Figure 4A, the phase current 2 (V₂) at a time instance 't-5' influences the total active energy (V₇) at a time instance '1'. Similarly, the phase current 2 (V₂) at a time instance `t-3' influences the total active energy (V₇) at a time instance '1'. The second determination module 213 may determine the second set of input variables based on the dependency between each variable of the first set of input variables and the output variable, at the plurality of past time instances. For example, it can be seen from Figure 4A that the variable (V₄) i.e., the average phase-to-phase voltage does not influence the total active energy (V₇). The total active energy (V₇) is independent of the average phase-to-phase voltage (V₄). Thus, the average phase-to-phase voltage (V₄) may not be considered as a second variable. In an embodiment, the second set of input variables are associated with a pre-defined dependency value on the output variable. For example, the pre-defined dependency value may be 0.2 in a scale of 0-10. The first set of input variables having the dependency less than the pre-defined dependency value may not be considered as a second variable and may be discarded.

Referring back to Figure 2, in an embodiment, the second determination module 213 may determine the plurality of past time instances to be considered for determining the second set of input variables. Firstly, the second determination module 213 may communicate with the machine learning model to determine an accuracy level of the machine learning model to determine the energy consumption for the time-series data, at one or more past time instances. Then, the second determination module 213 may identify the plurality of past time instances, until the accuracy level is within a pre-defined value. Referring again to Figure 4A, the second determination module 213 may determine the accuracy level of the machine learning model to determine the energy consumption for the time-series data by determining the dependency between the first set of input variables and the output variable, at a time instance `t-1'. The second determination module 213 may identify that the accuracy level is within a pre-defined value, or an output of the machine learning model is within an expected value.

Similarly, the second determination module 213 may determine the accuracy level of the machine learning model to determine the energy consumption for the time-series data by determining the dependency between the first set of input variables and the output variable, at the one or more past time instances `t-2', `t-3', 't-4', 't-5' and `t-6'. The second determination module 213 may identify that the accuracy level is within the pre-defined value for time instances `t-2', `t-3', 't-4', 't-5'. However, the second determination module 213 may identify that the accuracy level is not within the pre-defined value for time instance `t-6'. Hence, the second determination module 213 may determine the plurality of past time instances to be considered is up to `t-5'. The plurality of past time instances may be determined using techniques such as, but not limited to, Akaike information criterion (AIC) and the Bayesian information criterion (BIC).

Further, the second determination module 213 may determine the one or more dependency parameters based on the dependency between each variable of the first set of input variables and the output variable, at a plurality of past time instances. The one or more dependency parameters may comprise at least one of, a strength of the dependency, a directionality of the dependency, and a number of past time instances associated with the dependency from the plurality of past time instances. Referring again to Figure 4A, the variable V₇ is influenced by the variable V₂ at multiple past time instances, hence the strength of the dependency between the variable V₇ and the variable V₂ may be associated with a high value. The directionality of the dependency may include one of, a positive dependency and a negative dependency. For example, the variable V₇ may decrease with a change in value of the variable V₃, indicating the negative dependency. The second set of input variables and the one or more dependency parameters may be stored as the second determination data 208 in the memory 202.

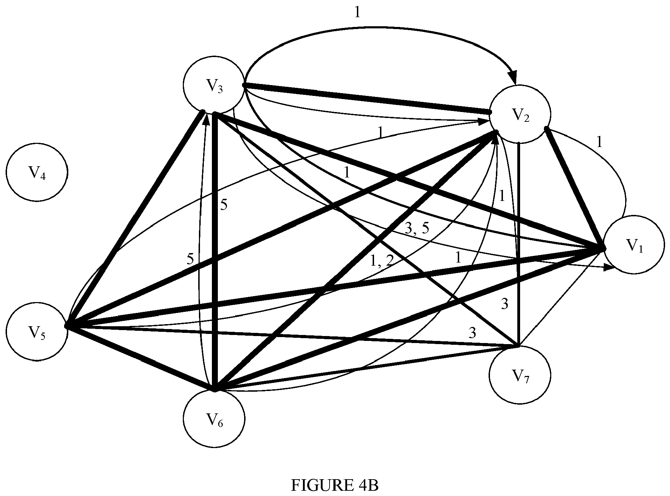

Referring back to Figure 2, in an embodiment, the network representation generation module 214 may be configured to receive the second determination data 208 from the second determination module 213. Further, the network representation generation module 214 may be configured to generate a network representation. The network representation may indicate the second set of input variables, the output variable, and the one or more dependency parameters. **Figure 4B** illustrates an exemplary network representation (also referred as conditional independence graph). The network representation may include nodes (also referred as parent nodes in PCMCI) indicating the second set of input variables and the output variable. Links or edges connecting the nodes may indicate the one or more dependency parameters. For instance, the strength of the dependency is indicated by thickness of the edges. The directionality of the dependency is indicated by arrows. The number of past time instances (also referred as time lags) associated with the dependency from the plurality of past time instances is indicated by values of the edges (also referred as p-values in PCMCI). The one or more dependency parameters indicate auto-correlation and cross-correlation among the plurality of input variables and the output variables. The network representation may be provided to the machine learning model for predicting energy consumption in the electrical distribution system 101. The present disclosure enables use of the network representation generated based on field data of the electrical distribution system 101 for predicting the energy consumption. This improves accuracy in predicting the energy consumption.

The auxiliary data 210 may store data, including temporary data and temporary files, generated by the one or more modules 205 for performing the various functions of the energy prediction system 103. The one or more modules 205 may also include the other modules 215 to perform various miscellaneous functionalities of the energy prediction system 103. The auxiliary data 210 may be stored in the memory 202. It will be appreciated that the one or more modules 205 may be represented as a single module or a combination of different modules.

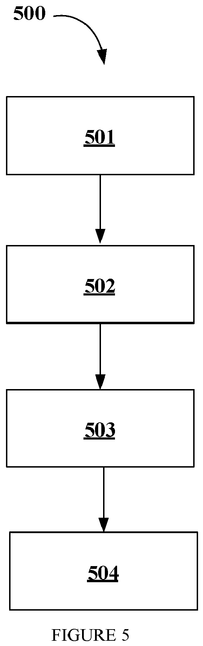

**Figure 5** shows an exemplary flow chart illustrating method steps for predicting the energy consumption in the electrical distribution system 101, in accordance with some embodiments of the present disclosure. As illustrated in Figure 5, the method 500 may comprise one or more steps. The method 500 may be described in the general context of computer executable instructions. Generally, computer executable instructions can include routines, programs, objects, components, data structures, procedures, modules, and functions, which perform particular functions or implement particular abstract data types.

The order in which the method 500 is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At step 501, the energy prediction system 103 may receive the time-series data of the plurality of input variables and the output variable of the electrical distribution system 101. The plurality of input variables and the output variable may comprise at least one of, electrical variables, mechanical variables, and environmental variables of the electrical distribution system 101. The energy prediction system 103 may receive the time-series data of the plurality of input variables and the output variable from the one or more sensors 102 associated with the electrical distribution system 101. The energy prediction system 103 may be further configured to convert the time-series data of each of the plurality of input variables and the output variable to covariance-stationary series.

At step 502, the energy prediction system 103 may determine the first set of input variables from the plurality of input variables, by using a Granger causality technique. The Granger causality technique uses a statistical hypothesis test for determining whether a time series is useful in forecasting another time series. The energy prediction system 103 may associate the time-series data of each of the plurality of input variables with the time-series data of the output variable, using the Granger causality technique. In an embodiment, the energy prediction system 103 may associate the time-series data based on the regression analysis.

At step 503, the energy prediction system 103 may determine the second set of input variables from the first set of input variables and one or more dependency parameters, using a conditional independence technique. The energy prediction system 103 may determine the dependency between each variable of the first set of input variables and the output variable, at a plurality of past time instances, using the conditional independence technique. In an embodiment, the energy prediction system 103 may determine the plurality of past time instances to be considered for determining the second set of input variables. The energy prediction system 103 may determine the one or more dependency parameters based on the dependency between each variable of the first set of input variables and the output variable, at the plurality of past time instances. The one or more dependency parameters may comprise at least one of, a strength of the dependency, a directionality of the dependency, and a number of past time instances associated with the dependency from the plurality of past time instances.

At step 504, the energy prediction system 103 may generate the network representation. indicating the second set of input variables, the output variable, and the one or more dependency parameters. The network representation may include the nodes indicating the second set of input variables and the output variable. Links or edges connecting the nodes may indicate the one or more dependency parameters. The network representation may be provided to the machine learning model for predicting energy consumption in the electrical distribution system 101.

### COMPUTER SYSTEM

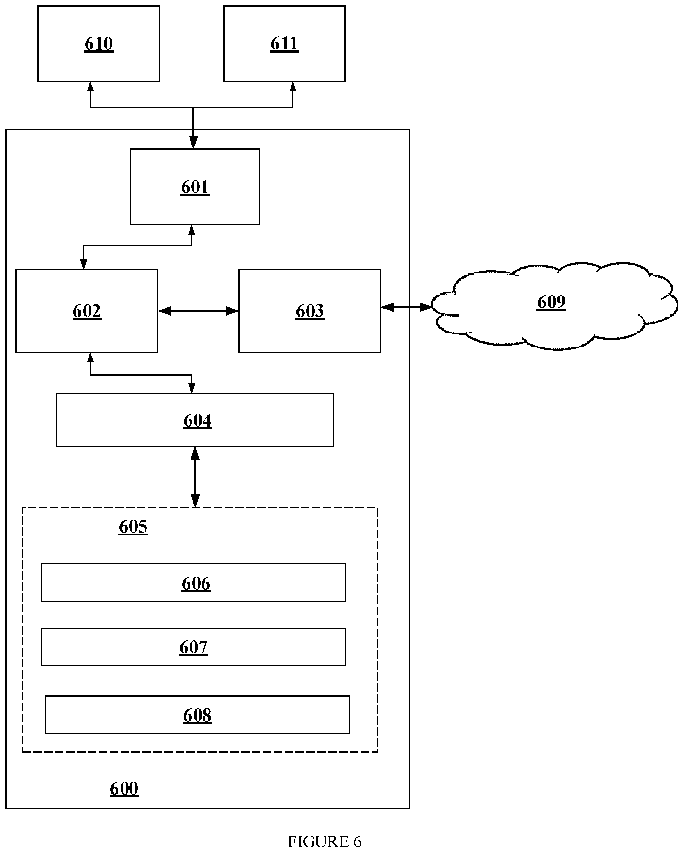

**Figure 6** illustrates a block diagram of an exemplary computer system 600 for implementing embodiments consistent with the present disclosure. In an embodiment, the computer system 600 may be used to implement the energy prediction system 103. Thus, the computer system 600 may be used for predicting energy consumption in the electrical distribution system 101. In an embodiment, the computer system 600 may receive the time-series data of the plurality of input variables and the output variable over a communication network 609, when the computer system 600 is implemented in an edge computing platform or a cloud computing platform. In another embodiment, the computer system 600 may be implemented in the electrical distribution system 101. The computer system 600 may comprise a Central Processing Unit 602 (also referred as "CPU" or "processor"). The processor 602 may comprise at least one data processor. The processor 602 may include specialized processing units such as integrated system (bus) controllers, memory management control units, floating point units, graphics processing units, digital signal processing units, etc.

The processor 602 may be disposed in communication with one or more input/output (I/O) devices (not shown) via I/O interface 601. The I/O interface 601 may employ communication protocols/methods such as, without limitation, audio, analog, digital, monoaural, RCA, stereo, IEEE (Institute of Electrical and Electronics Engineers) -1394, serial bus, universal serial bus (USB), infrared, PS/2, BNC, coaxial, component, composite, digital visual interface (DVI), high-definition multimedia interface (HDMI), Radio Frequency (RF) antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 601, the computer system 600 may communicate with one or more I/O devices. For example, the input device 610 may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, sensors, etc. The output device 611 may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

The processor 602 may be disposed in communication with the communication network 609 via a network interface 603. The network interface 603 may communicate with the communication network 609. The network interface 603 may employ connection protocols including, without limitation, direct connect, Ethernet (e.g., twisted pair 10/100/1000 Base T), transmission control protocol/internet protocol (TCP/IP), token ring, IEEE 802. 1 1a/b/g/n/x, etc. The communication network 609 may include, without limitation, a direct interconnection, local area network (LAN), wide area network (WAN), wireless network (e.g., using Wireless Application Protocol), the Internet, etc. The network interface 603 may employ connection protocols include, but not limited to, direct connect, Ethernet (e.g., twisted pair 10/100/1000 Base T), transmission control protocol/internet protocol (TCP/IP), token ring, IEEE 802.11a/b/g/n/x, Bluetooth mesh, Zigbee, etc.

The communication network 609 includes, but is not limited to, a direct interconnection, an e-commerce network, a peer to peer (P2P) network, local area network (LAN), wide area network (WAN), wireless network (e.g., using Wireless Application Protocol), the Internet, Wi-Fi, and such. The first network and the second network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the first network and the second network may include a variety of network devices, including routers, bridges, servers, computing devices, storage devices, etc.

In some embodiments, the processor 602 may be disposed in communication with a memory 605 (e.g., RAM, ROM, etc. not shown in Figure 6) via a storage interface 604. The storage interface 604 may connect to memory 605 including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 605 may store a collection of program or database components, including, without limitation, user interface 606, an operating system 607, web browser 608 etc. In some embodiments, computer system 600 may store user/application data, such as, the data, variables, records, etc., as described in this disclosure. Such databases may be implemented as fault-tolerant, relational, scalable, secure databases such as Oracle ^{®} or Sybase^{®}.

The operating system 607 may facilitate resource management and operation of the computer system 600. Examples of operating systems include, without limitation, APPLE MACINTOSH^{R} OS X, UNIX^{R}, UNIX-like system distributions (E.G., BERKELEY SOFTWARE DISTRIBUTION^{™} (BSD), FREEBSD^{™}, NETBSD^{™}, OPENBSD^{™}, etc.), LINUX DISTRIBUTIONS^{™} (E.G., RED HAT^{™}, UBUNTU^{™}, KUBUNTU^{™}, etc.), IBM^{™} OS/2, MICROSOFT^{™} WINDOWS^{™} (XP^{™}, VISTA^{™}/7/8, 10 etc.), APPLE^{R} IOS^{™}, GOOGLE^{R} ANDROID^{™}, BLACKBERRY^{R} OS, or the like.

In some embodiments, the computer system 600 may implement the web browser 608 stored program component. The web browser 608 may be a hypertext viewing application, for example MICROSOFT^{R} INTERNET EXPLORER^{™}, GOOGLE^{R} CHROME^{™0}, MOZILLA^{R} FIREFOX^{™}, APPLE^{R} SAFARI^{™}, etc. Secure web browsing may be provided using Secure Hypertext Transport Protocol (HTTPS), Secure Sockets Layer (SSL), Transport Layer Security (TLS), etc. Web browsers 608 may utilize facilities such as AJAX^{™}, DHTML^{™}, ADOBE^{R} FLASH^{™}, JAVASCRIPT^{™}, JAVA^{™}, Application Programming Interfaces (APIs), etc. In some embodiments, the computer system 600 may implement a mail server (not shown in Figure) stored program component. The mail server may be an Internet mail server such as Microsoft Exchange, or the like. The mail server may utilize facilities such as ASP^{™}, ACTIVEX^{™}, ANSI^{™} C++/C#, MICROSOFT^{R}, .NET^{™}, CGI SCRIPTS^{™}, JAVA^{™}, JAVASCRIPT^{™}, PERL^{™}, PHP^{™}, PYTHON^{™}, WEBOBJECTS^{™}, etc. The mail server may utilize communication protocols such as Internet Message Access Protocol (IMAP), Messaging Application Programming Interface (MAPI), MICROSOFT^{R} exchange, Post Office Protocol (POP), Simple Mail Transfer Protocol (SMTP), or the like. In some embodiments, the computer system 600 may implement a mail client stored program component. The mail client (not shown in Figure) may be a mail viewing application, such as APPLE^{R} MAIL^{™}, MICROSOFT^{R} ENTOURAGE^{™}, MICROSOFT^{R} OUTLOOK^{™}, MOZILLA^{R} THUNDERBIRD^{™}, etc.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, non-volatile memory, hard drives, Compact Disc Read-Only Memory (CD ROMs), Digital Video Disc (DVDs), flash drives, disks, and any other known physical storage media.

The present disclosure uses time series data of variables of the electrical distribution system to compute causal effects for the energy consumption. The present disclosure uses causal modelling approach to identify variables influencing the energy consumption. Then, the present disclosure uses causal relationship analysis for generating causal network. The causal network provides high causal detection and reduces false positives in determination of the causal relationships. The casual network indicates dependency parameters such as a strength of the dependency, a directionality of the dependency, a time lag associated with the dependency, and the like. Hence, the present disclosure increases accuracy in predicting the energy consumption by using the casual relationship analysis on real-time field data of the electrical distribution system.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise. The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of Figure 5 shows certain events occurring in a certain order. In alternative embodiments, certain operations may be performed in a different order, modified, or removed. Moreover, steps may be added to the above described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

### Referral Numerals:

| **Referral number** | **Description** |
|---|---|
| 100 | Exemplary environment |
| 101 | Electrical distribution system |
| 102 | One or more sensors |
| 103 | Energy prediction system |
| 200 | Detailed diagram |
| 201 | I/O interface |
| 202 | Processor |
| 203 | Memory |
| 204 | Computation data |
| 205 | Modules |
| 206 | Input data |
| 207 | First determination data |
| 208 | Second determination data |
| 209 | Network representation generation data |
| 210 | Auxiliary data |
| 211 | Input module |
| 212 | First determination module |
| 213 | Second determination module |
| 214 | Network representation generation module |
| 215 | Auxiliary modules |
| 600 | Computer system |
| 601 | I/O interface |
| 602 | Processor |
| 603 | Network interface |
| 604 | Storage interface |
| 605 | Memory |
| 606 | User interface |
| 607 | Operating system |
| 608 | Web browser |
| 609 | Communication network |
| 610 | Input device |
| 611 | Output device |

## Claims

1. A method of predicting energy consumption in an electrical distribution system (101), the method comprising:
receiving, by a processor (203), time-series data of a plurality of input variables and an output variable of an electrical distribution system (101), from one or more sensors (102) associated with the electrical distribution system (101);
determining, by the processor (203), a first set of input variables from the plurality of input variables, based on effects of the plurality of input variables on the output variable, by associating the time-series data of each of the plurality of input variables with the time-series data of the output variable;
determining, by the processor (203), a second set of input variables from the first set of input variables and one or more dependency parameters, based on a dependency between each variable of the first set of input variables and the output variable, at a plurality of past time instances; and
generating, by the processor (203), a network representation indicating the second set of input variables, the output variable, and the one or more dependency parameters, wherein a machine learning model predicts energy consumption in the electrical distribution system (101) using the network representation.

2. The method of claim 1, wherein the plurality of input variables and the output variable comprises at least one of, electrical variables, mechanical variables, and environmental variables of the electrical distribution system (101).

3. The method of claim 1 or 2, wherein the second set of input variables are associated with a pre-defined dependency value on the output variable.

4. The method of any of the preceding claims, wherein receiving the time-series data, further comprising:
converting the time-series data of each of the plurality of input variables and the output variable to covariance-stationary series.

5. The method of any of the preceding claims, wherein the plurality of past time instances for generation of the network representation are identified by:
determining an accuracy level of the machine learning model to determine the energy consumption for the time-series data, at one or more past time instances; and
identifying the plurality of past time instances, until the accuracy level is within a pre-defined value.

6. The method of any of the preceding claims, wherein the first set of input variables are determined from the plurality of input variables by using a Granger causality technique, based on regression analysis.

7. The method of any of the preceding claims, wherein the second set of input variables and the one or more dependency parameters are determined using a conditional independence technique.

8. The method of any of the preceding claims, wherein the one or more dependency parameters comprise at least one of, a strength of the dependency, a directionality of the dependency, and a number of past time instances associated with the dependency from the plurality of past time instances.

9. An energy prediction system (103) for predicting energy consumption in an electrical distribution system (101), the energy prediction system (103) comprises:
a processor (203); and
a memory (202), wherein the memory (202) stores processor-executable instructions, which, on execution, causes the processor (203) to:
receive time-series data of a plurality of input variables and an output variable of an electrical distribution system (101), from one or more sensors (102) associated with the electrical distribution system (101);
determine a first set of input variables from the plurality of input variables, based on effects of the plurality of input variables on the output variable, by associating the time-series data of each of the plurality of input variables with the time-series data of the output variable;
determine a second set of input variables from the first set of input variables and one or more dependency parameters, based on a dependency between each variable of the first set of input variables and the output variable, at a plurality of past time instances; and
generate a network representation indicating the second set of input variables, the output variable, and the one or more dependency parameters, wherein a machine learning model predicts energy consumption in the electrical distribution system (101) using the network representation.

10. The energy prediction system (103) of claim 9, wherein the plurality of input variables and the output variable comprises at least one of, electrical variables, mechanical variables, and environmental variables of the electrical distribution system (101).

11. The energy prediction system (103) of claim 9 or 10, wherein the second set of input variables are associated with a pre-defined dependency value on the output variable.

12. The energy prediction system (103) of any of the claims 9 - 11, wherein upon receiving the time-series data, the processor (203) is further configured to:
convert the time-series data of each of the plurality of input variables and the output variable to covariance-stationary series.

13. The energy prediction system (103) of any of the claims 9 - 12, wherein the processor (203) identifies the plurality of past time instances for generation of the network representation by:
determining an accuracy level of the machine learning model to determine the energy consumption for the time-series data, at one or more past time instances; and
identifying the plurality of past time instances, until the accuracy level is within a pre-defined value.

14. The energy prediction system (103) of any of the claims 9 - 13, wherein the processor (203) determines the first set of input variables from the plurality of input variables by using a Granger causality technique, based on regression analysis.

15. The energy prediction system (103) of any of the claims 9 - 14, wherein the processor (203) determines the second set of input variables and the one or more dependency parameters using a conditional independence technique; and/or wherein the one or more dependency parameters comprise at least one of, a strength of the dependency, a directionality of the dependency, and a number of past time instances associated with the dependency from the plurality of past time instances.
